# EUROPÄISCHE PATENTSCHRIFT

(11) **EP 0 756 536 B1**
(45) Veröffentlichungstag und Bekanntmachung des Hinweises auf die Patenterteilung: **09.09.1998**
(21) Anmeldenummer: 95917339.4
(22) Anmeldetag: 19.04.1995
(51) Int. Cl.: B29B 15/12

(54) **VERFAHREN UND VORRICHTUNG ZUR FASERBÜNDELIMPRÄGNIERUNG**
PROCESS AND DEVICE FOR IMPREGNATING FIBRE BUNDLES
PROCEDE ET DISPOSITIF D'IMPREGNATION DE FAISCEAUX DE FIBRES

(30) Priorität: 19.04.1994 DE 4413501
(43) Veröffentlichungstag der Anmeldung: 05.02.1997
(73) Patentinhaber: Institut für Verbundwerkstoffe GmbH, 67663 Kaiserslautern (DE)
(72) Erfinder: LUTZ, Andreas, D-67669 Kaiserslautern (DE)
(74) Vertreter: Lang, Friedrich, Dipl.-Ing.
(86) Internationale Anmeldenummer: EP9501476
(87) Internationale Veröffentlichungsnummer: WO9528266

(56) Entgegenhaltungen:
- EP-A- 0 140 532
- EP-A- 0 167 303
- CH-A- 439 205
- GB-A- 2 229 136

## Beschreibung

Die Erfindung betrifft ein Verfahren zur Faserbündelimgrägnierung, bei dem das Faserbündel von einem Matrixwerkstoff durchtränkt wird.

Ein solches Verfahren ist aus der EP 0 415 517 B1 bekannt. In dieser Druckschrift wird eine Technik mit einer einseitigen Imprägnierrichtung beschrieben, bei der ein erhöhter Systemdruck des flüssigen Matrixwerkstoffs quer zum Faserbündel abgebaut wird. Das Faserbündel wird dabei über einen Düsenkopf gezogen und der Matrixwerkstoff quer zur Bewegungsrichtung des Bündels durchgedrückt. Bei diesem Verfahren ist die tribologische Beanspruchung des Faserbündels hoch und die Qualität des hergestellten Materials kann durch eine Vielzahl von einzelnen Filamentbrüchen im Faserbündel vermindert werden. Die Filamente in einem Faserbündel liegen oft als Häufungen, d.h. nicht gleichmäßig über die Faserbündelquerschnittsfläche verteilt, vor.

Diese ungleichmäßige Verteilung kann dazu führen, daß die strömende Matrixschmelze das Faserbündel spaltet und infolgedessen die Matrix durch die Spalte und nicht durch das zu imprägnierende Faserbündel strömt. Auch ohne die Spaltung des Faserbündels sucht sich die Matrix immer den Weg des kleinsten Widerstandes, d.h. sie durchdringt das Faserbündel nur dort, wo die Faserbündeldicke am kleinsten ist. Dies bedeutet, daß Stellen mit vielen aufeinanderliegenden Filamentschichten nur ungenügend imprägniert werden.

Probleme beim Imprägnieren sind die hohen Viskositäten der Matrixwerkstoffe und die hohe Bruchempfindlichkeit der einzelnen Filamente innerhalb des Faserbündels. Die einzelnen Filamente liegen sehr dicht beieinander und es erweist sich als schwierig, alle Filamente rundherum gleichmäßig mit Matrixmaterial zu imprägnieren. Es gilt zu verhindern, daß innerhalb des imprägnierten Faserbündels, das auch als Bändchen oder Tape bezeichnet wird, Lufteinschlüsse oder Bereiche unzureichender Benetzung entstehen, die die Festigkeit, Steifigkeit und andere mechanische Kennwerte des Faserbündels stark vermindern.

Der Erfindung liegt die **Aufgabe** zugrunde, ein Verfahren der eingangs genannten Art zu schaffen, bei dem eine besonders gute Imprägnierung des Faserbündels oder einer anderen Vorform der Faser (z.B. Fasermatten) bei hohem Durchsatz stattfindet und zugleich Filamentbrüche weitgehend vermieden werden können. Außerdem soll eine Vorrichtung zur Durchführung des erfindungsgemäßen Verfahren geschaffen werden.

Die Lösung dieser Aufgabe erfolgt gemäß den kennzeichnenden Merkmalen des Anspruchs 1. Vorteilhafte Weiterbildungen sind in den abhängigen Ansprüchen beschrieben.

Nach dem Grundgedanken der Erfindung wird das Faserbündel während des Imprägniervorgangs auf einem Träger mitgeführt. Das Faserbündel wird von dem Träger gestützt und an der Imprägniereinrichung vorbeigeführt. Es kommt also nicht zu einer Relativbewegung zwischen dem Faserbündel und feststehenden Teilen der Imprägniereinrichtung. Dadurch werden Abrasionsprozesse und eine hohe tribologische Beanspruchung des Faserbündels sowie des Imprägnierwerkzeuges vermieden. Durch die stützende Wirkung des Trägers wird das Faserbündel auch bei hohem Imprägnierdruck wirkungsvoll entlastet. Durch die Verwendung einer Trageinrichung werden Filamentbrüche weitgehend vermieden, und damit wird die Qualität des imprägnierten Faserbündels verbessert.

In einer vorteilhaften Weiterbildung wird das Faserbündel durch zusätzliche Maßnahmen auf der Trageinrichtung festgehalten. Dadurch entsteht ein besonders guter Kontakt zwischen Auflagefläche und Faserbündel, wodurch das Faserbündel besonders gut gegen eine Druckbelastung während des Imprägniervorgangs geschützt ist. Dies kann durch eine einfache Spannung des Faserbündels, z.B. durch eine Führung des Faserbündels über eine gebremste Rolle, erreicht werden.

Eine Zuführung des Matrixwerkstoffes zu dem Faserbündel geschieht wie folgt: Der Matrixwerkstoff wird im flüssigen Zustand mit Hilfe eines im Fördergerät (Extruder) aufgebauten Druckes durch eine durchlässige Auflagefläche hindurch gepreßt, um dann weiter durch das Faserbündel geführt zu werden. Auch eine Zuführung des Matrixwerkstoffs von der anderen Seite, also zunächst durch das Faserbündel und dann durch die Trageinrichtung, ist möglich wenn das beschriebene Prinzip der gleichmäßigen Durchströmung nicht angewendet wird. In beiden Fällen erfüllt die Trageinrichtung ihre Stützfunktion.

Zur Verminderung des Drucks ist es von Vorteil, wenn der Imprägniervorgang auf einem möglichst großen Bereich stattfindet. Denn dann kann die Imprägnierung bei gleichbleibender Qualität mit geringem Druck durchgeführt werden und so ein faserverstärkter Kunststoff mit sehr wenigen Filamentbrüchen hergestellt werden.

Prinzipielle Vorteile dieses Verfahrens sind, daß das Faserbündel während des Imprägniervorgangs keine Abrasion aufgrund von Relativbewegungen zwischen Faserbündel und Imprägnierstation erleidet, weil gemäß der Erfindung praktisch jegliche Relativbewegung zwischen Filamenten des Faserbündels und Bauteilen der Imprägnierstation vermieden werden. Es ist möglich, den Volumenprozentanteil von Faser zu Matrixwerkstoff in weiten Bereichen zu regeln. Außerdem ist es mit diesem Verfahren möglich, eine sehr hohe Ausbringungsmenge zu erreichen und den Matrixüberfluß auf einem sehr niedrigen Niveau zu halten. Durch die beschriebene Ausführung der Trageinrichtung ist eine vollständige Imprägnierung, auch bei ungleichmäßiger Filamentverteilung über die Breite des Faserbündels gewährleistet.

In einer besonders vorteilhaften Ausbildung der Erfindung wird ein Imprägnierrad als Trageinrichtung verwendet. Bei einem Imprägnierrad mit feststehender Nabe ist nur die Lauffläche drehbar und für den flüssigen Matrixwerkstoff durchlässig gestaltet. Da sich die Lauffläche mit der Abzugsgeschwindigkeit des Faserbündels dreht, kommt es zu keiner Relativbewegung zwischen Untergrund und Faserbündel. Die Filamente reiben sich nicht an feststehenden Maschinenteilen, auf Abrasion beruhende Filamentbrüche können nicht auftreten.

Die Imprägniereinrichtung und weitere Vorrichtungen zur Verfahrensdurchführung können im Bereich der feststehenden Nabe des Rades angeordnet werden. Der gegenüber einer kleinen Düse aufgeweitete Imprägnierbereich erlaubt einen kleineren Imprägnierdruck. Die Fasern erfahren keinen Druckstoß, wie an einer Imprägnierdüse, sondern werden sanft bis zum Erreichen des gewünschten Imprägniergrades am Ende des Imprägnierbereiches durchtränkt. Der Durchsatz kann durch die zeitliche Verlängerung des Imprägnierprozesses, d.h. der Imprägnierzeit, das durch eine Vergrößerung des Imprägnierraddurchmessers geschehen kann, beliebig gesteigert werden.

Eine weitere Steigerung des Durchsatzes wird dadurch erreicht, daß man mehrere Faserbündel nebeneinander, d.h. parallel auf dem Imprägnierrad führt, und gleichzeitig das Rad in der Breite für mehrere nebeneinanderliegende Bündel entsprechend auslegt. Auch auf dieser Art kann der Durchsatz beliebig gesteigert werden.

Der Weg der flüssigen Matrix vom Inneren des Imprägnierwerkzeuges bis zu dem Faserbündel, d.h. die Verweilzeit der schmelzflüssigen Matrix im Imprägnierwerkzeug, ist kurz. Dies bedeutet, daß die Gefahr, daß aufgrund langer Temperierung der Matrix eine Beschädigung, z.B. in Form einer thermischen Degradierung stattfinden könnte, gering ist. Aufgrund der offenen Konstruktion ist ein schneller Zugriff zu allen Komponenten möglich und die Einrichtezeit dementsprechend kurz.

In einer Weiterentwicklung der Erfindung werden die Faserbündel vor dem Imprägnieren erwärmt, dies kann z.B. durch heiße Luft geschehen. Die Ablösung des imprägnierten Faserbündels kann ebenfalls durch den Zustrom temperierter Luft, die unter erhöhtem Druck steht, verbessert werden.

In einer anderen Weiterentwicklung kann man mehrere Imprägnierräder nacheinander schalten, die sich auch gegensinnig drehen können. Dies kann in manchen Fällen von Vorteil sein und kann auch zur weiteren Durchsatzsteigerung infolge schnellerer Abzugsgeschwindigkeiten der Faserbündel führen.

In einer anderen Weiterentwicklung der Erfindung wird in dem Bereich der Trageinrichtung, die nicht von dem Faserbündel belegt ist, eine Einrichtung zum Säubern der Lauffläche angebracht. So steht immer eine gut vorbereitete Lauffläche zur Aufnahme des Faserbündels bereit, die fast keine Matrixreste mehr aufweist.

In anderen Ausführungsformen kann die Trageinrichtung beispielsweise aus einem umlaufenden Band oder umlaufenden Kettengliedern oder aus einer Auflagefläche mit einer Rückführeinrichtung bestehen.

Häufig benutzte Faserwerkstoffe sind Glas-, Kohlenstoff-(Carbon-) oder Aramidfasern. Gebräuchliche Matrixwerkstoffe sind Duromere und Thermoplaste. Das erfindungsgemäße Verfahren ist jedoch nicht auf diese Materialien beschränkt, sondern kann auf eine Vielzahl von Materialien bei der Herstellung von faserverstärkten Werkstoffen angewandt werden.

Nachfolgend wird die Erfindung anhand der Zeichnung weiter erläutert. Im einzelnen zeigen die Darstellungen in:
- Fig. 1: einen schematisch dargestellten Gesamtaufbau einer erfindungsgemäßen Vorrichtung;
- Fig. 2: eine schematische Ansicht eines Imprägnierrades in einer Seitenansicht;
- Fig. 3: eine schematische Schnittdarstellung eines Imprägnierrades;
- Fig. 4: eine schematische Darstellung eines umlaufenden Imprägnierbandes;
- Fig. 5: eine schematische Darstellung einer Trageinrichtung mit Rückführeinrichtung;
- Fig. 6: eine schematische Darstellung der Durchströmung eines homogenen Körpers;
- Fig. 7: eine schematische Darstellung der Durchströmung einer durchlässigen Trageinrichtung und
- Fig. 8: eine schematische, teilgeschnittene Ansicht eines Imprägnierrades mit einer Ausschnittsvergrößerung.

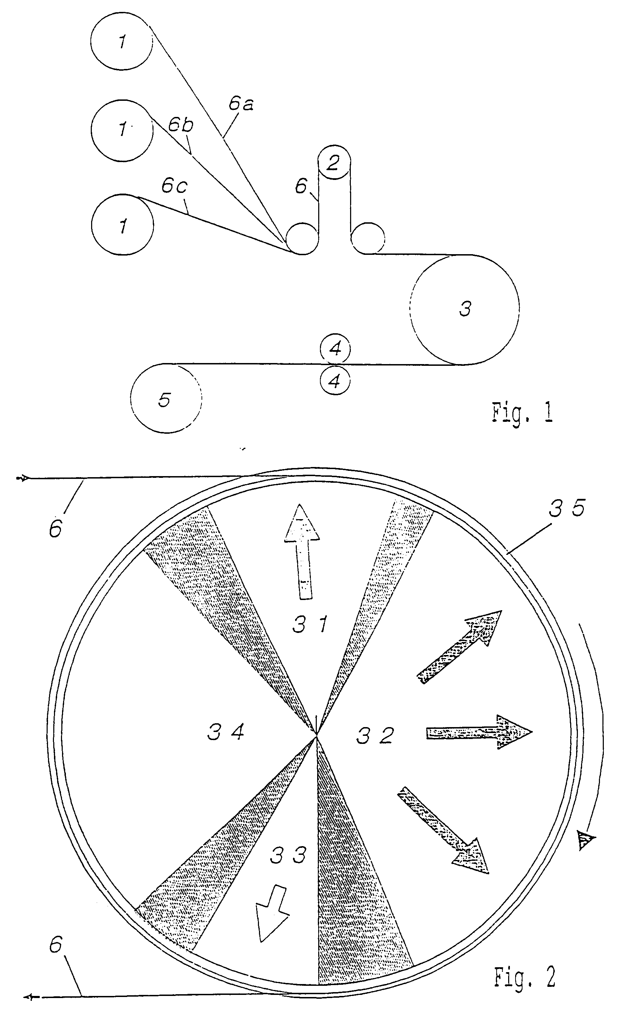

In Fig. 1 ist ein schematisierter Gesamtaufbau einer erfindungsgemäßen Vorrichtung dargestellt. Der Imprägnierprozeß beginnt falls nötig mit dem Zusammenführen von kleinen Faserbündeln. Diese werden von Halterungen 1 zugeführt. Die Anzahl der benötigten kleinen Faserbündel richtet sich nach der gewünschten Stärke des fertigen Faserbündels. In der zeichnerischen Ausgestaltung sind drei kleine Faserbündel 6a, 6b und 6c dargestellt. Das zusammengeführte Faserbündel 6 kann durch eine Umlenkung des Faserbündels über eine gebremste Rolle 2 auf eine geforderte Zugspannung gebracht werden.

Sodann beginnt der Wirkungsbereich der erfindungsgemäßen Imprägnierstation, die in Fig. 1 als Imprägnierrad 3 ausgebildet ist. Nach dem eigentlichen Imprägniervorgang kann eine Formeinrichtung 4 zur Verfügung stehen, mit der das Faserbündel nachgeformt werden kann, um dann als fertig imprägniertes Faserbündel auf eine Rolle 5 aufgerollt zu werden. Das imprägnierte Faserbündel kann auch direkt nach dem Verlassen des Imprägnierrades weiter verarbeitet werden.

In Fig. 2 wird in einer schematischen Darstellung des Imprägnierrades die Funktionsweise des Imprägnierrades dargestellt. Das Faserbündel 6 läuft auf der sich mit gleicher Geschwindigkeit drehenden Lauffläche 35. Der Nabenbereich ist feststehend. Der erste Bereich 31 dient der Erwärmung des ankommenden Faserbündels. Dort strömt angewärmte Luft durch die Lauffläche an das Faserbündel. Der eigentliche Imprägniervorgang geschieht im zweiten Bereich 32. Dort wird der flüssige Matrixwerkstoff mit erhöhtem Druck durch die Lauffläche und durch das zu imprägnierende Faserbündel gedrückt, bis der gewünschte Imprägnierungsgrad Ende des Bereiches erreicht wird. Da der Imprägniervorgang über einen großen Winkelbereich stattfindet, ist genügend Imprägnierzeit zur vollständigen Imprägnierung vorhanden. Das hat zur Folge, daß der benötigte Matrixdruck, der senkrecht gegen das Faserbündel wirkt, so klein wie möglich gehalten werden kann. Ein geringer Innendruck reduziert auch die nötige Faserbündelspannung. Zum anderen kann der Durchsatz mittels erhöhter Drehgeschwindigkeit der Lauffläche 35 gesteigert werden. Im dritten Bereich 33 findet der Ablöseprozeß des imprägnierten Faserbündels von der Lauffläche 35 statt. Mit temperierter Luft und erhöhtem Druck und durch die gegebene Abzugsrichtung kann das Faserbündel die Lauffläche 35 verlassen. Im letzten Bereich 34 liegt kein Faserbündel auf der Lauffläche 35. Diese kann wieder zur Aufnahme des Faserbündels vorbereitet werden. Die einzelnen Bereiche sind als in sich abgeschlossene Kammern zu verstehen, deren Wandungen zum einen aus den geformten Bereichen der feststehenden Nabe, zum anderen aus der sich in Faserbündelgeschwindigkeit drehenden Lauffläche bestehen. Die benötigten Medien werden von außen durch Stutzen in die Kammer zugeführt.

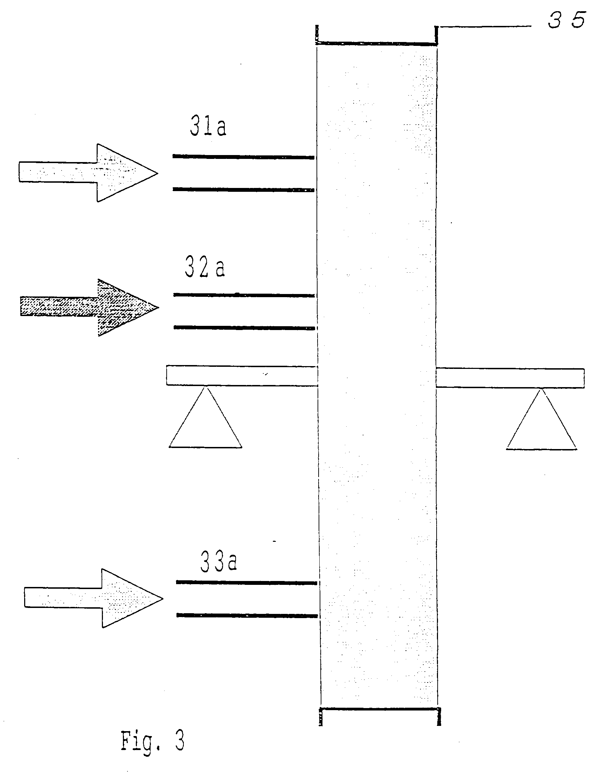

In Fig. 3 ist das Imprägnierrad in einer Draufsicht-Darstellung gezeigt. Die Lauffläche 35 ist für den flüssigen Matrixwerkstoff durchlässig und drehbar gestaltet. Die Breite der Lauffläche entspricht der des gewonnenen Faserbündels. Die Randbereiche sind etwas erhöht ausgebildet. Durch die Zuführungseinrichtung 31a wird angewärmte Luft in den Bereich 31 geleitet. Durch die Zuführungseinrichtung 32a wird der flüssige Matrixwerkstoff zu der Imprägniereinrichtung geleitet. Temperierte Luft mit erhöhtem Druck wird durch die Zuführungseinrichtung 33a in den Bereich 33 geleitet.

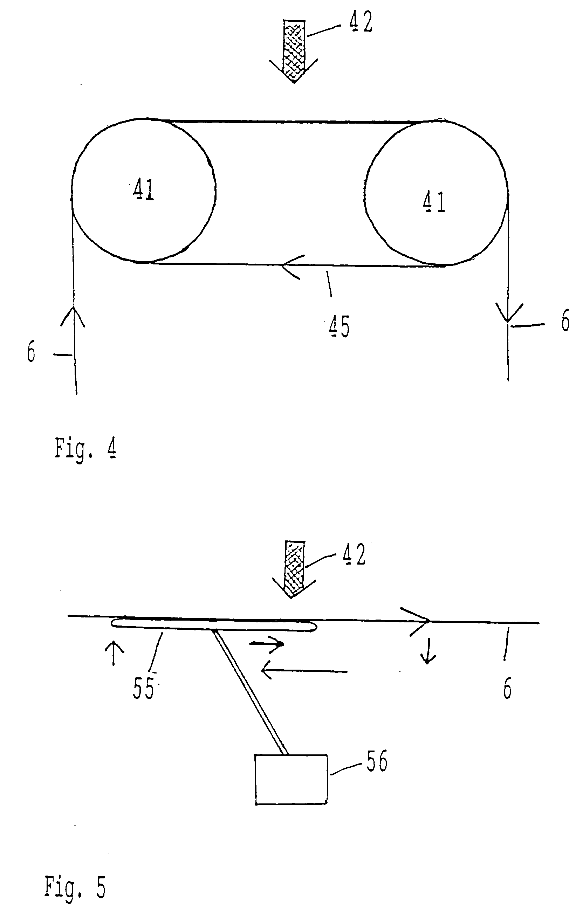

In Fig. 4 ist eine weitere Ausführungsform der Erfindung dargestellt. Ein umlaufendes Band 45, das auch aus Kettengliedern aufgebaut sein kann, läuft über zwei (oder mehr) Rollen 41. Das Faserbündel 6 wird von dem umlaufenden Band 45 aufgenommen und an der Imprägniereinrichtung 42 vorbeigeführt. In der hier gezeigten Ausführungsform wird der Matrixwerkstoff von oben, also zunächst durch das Faserbündel und dann durch die Auflagefläche, gedrückt. Auch hier ist es von Vorteil, wenn die Auflagefläche durchlässig für den Matrixwerkstoff ist.

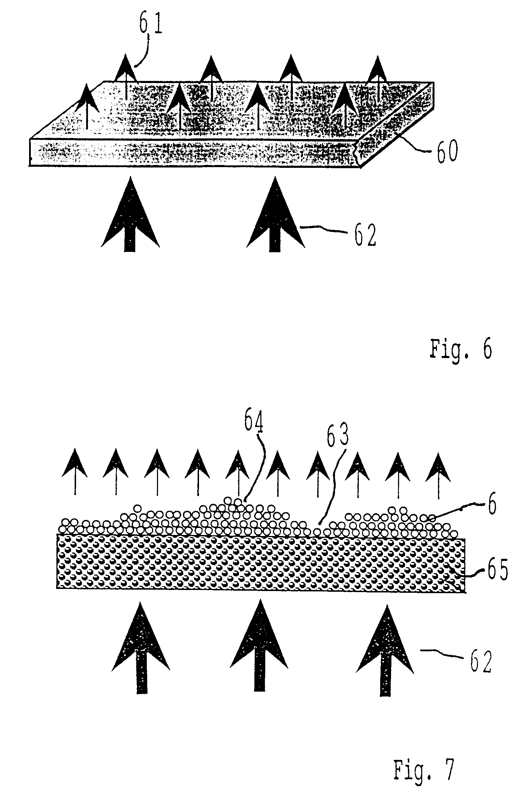

In Fig. 5 wird das Faserbündel 6 mit einer Trageinrichtung 55 an der Imprägniereinrichtung 42 vorbeigeführt. Die Trageinrichtung 55 bewegt sich zunächst mit der Geschwindigkeit des Faserbündels 6 und wird dann von einer Rückführeinrichtung 56 zunächst ein Stück nach unten bewegt und dann mit großer Geschwindigkeit an die Ausgangsposition zurück. Durch eine geschickte Steuerung der Rückführeinrichtung 56 in Verbindung mit einer zeitlichen und/oder räumlichen Steuerung der Imprägniereinrichtung 42 kann erreicht werden, daß jeder Teil des Faserbündels gleichmäßig imprägniert wird, während er von unten abgestützt wird.

In Fig. 6 wird allgemein dargestellt, wie Fluide einen homogenen Körper durchströmen. Dabei ist ein homogener Körper 60 dargestellt, der durch ein Fluid von unten durchströmt wird. Die Pfeile 62 deuten die Fließrichtung an und entsprechen der Imprägniereinrichtung, die einen Matrixwerkstoff zuführt. Die Pfeile 61 zeigen an, daß das Fluid aus der Austrittsfläche des homogenen Körpers 60 gleichmäßig hervortritt, da dieser über sein gesamtes Volumen einen homogenen Durchdringungswiderstand besitzt.

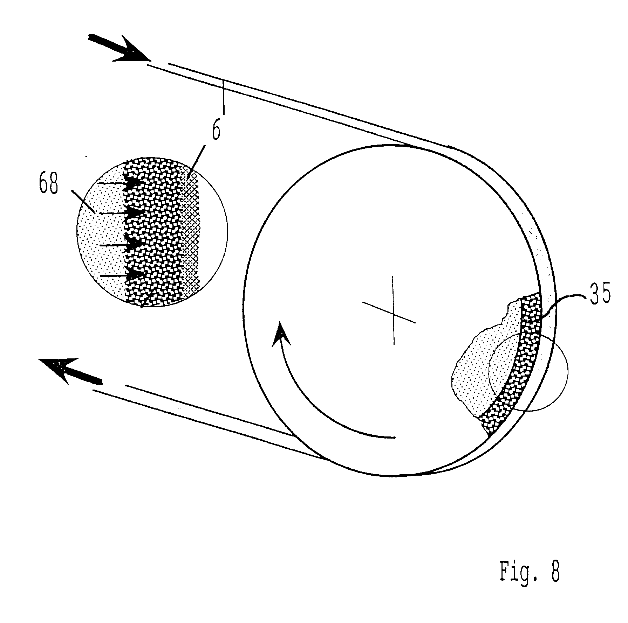

Unter Bezug auf Fig. 7 wird die Bedeutung des Prinzips der gleichmäßigen Durchströmung bei der Faserbündelimprägnierung beschrieben. Ein Faserbündel 6, das von einem Roving oder einer Halterung 1 abgewickelt wird, besteht aus sehr vielen Fasern, die auch als Filamente bezeichnet werden. Bei näherer Betrachtung eines Faserbündels 6 ist zu erkennen, daß die Filamente nicht gleichmäßig über der Breite neben- und übereinander liegen. Es gibt Bereiche 64, in denen sich die Filamentebenen häufen. Diese Filamenthäufungen 64 liegen längs eines Faserbündels an verschiedenen Stellen der Querschnittsfläche. Für die Imprägnierung bedeutet dies, daß der Durchdringungswiderstand eines Faserbündels über dessen Querschnitt für den schmelzflüssigen Matrixwerkstoff nicht konstant ist. In Bereichen von Filamenthäufungen ist der Durchdringungswiderstand hoch, während er in Bereichen 63, die nur aus wenigen Filamentebenen bestehen, eher klein ist. Außerdem besteht die Möglichkeit, daß der Matrixwerkstoff das Faserbündel 6 beim Durchdringen an einer dünnen Stelle 63 spaltet, woraufhin ein Großteil des Matrixwerkstoffes durch diesen Spalt im Faserbündel 6 fließt und damit der aufgebaute Druck des Matrixwerkstoffes nachläßt. Eine Imprägnierung an Stellen mit Filamenthäufungen 64 kann so nicht mehr stattfinden. Da die Filamentverteilung eines Faserbündels 6 nur zum Teil egalisiert werden kann, bietet der unter Bezugnahme auf Fig. 7 und 8 beschriebene Aufbau eine gute Möglichkeit, einen hohen Imprägnierungsgrad unabhängig von der Dickenverteilung der Filamentebenen zu gewährleisten. Einer dementsprechend gestalteten Trageinrichtung kommt ein eigenständiger Erfindungscharakter zu.

Dieser Fall ist nun in Fig. 7 dargestellt. Das zu imprägnierende Faserbündel 6 wird fest mit einem homogenen porösen Körper 65 verbunden, der ein Teil der Trageinrichtung sein kann und zur Aufnahme des Faserbündels und durchlässig für den flüssigen Matrixwerkstoff ausgebildet ist. Verbindet man diesen Körper 65 fest mit dem zu imprägnierenden Faserbündel 6, dessen Durchdringungswiderstand deutlich kleiner und ungleichmäßig verteilt vorliegt, so wird auch das Faserbündel mit einer gleichmäßigen Fließfront durchströmt. Dies beruht auf der Tatsache, daß in dem Faserbündel 6 der Matrixwerkstoff mit konstantem Druck und Fließgeschwindigkeitsbedingungen eintreten kann. Die Fließfront strömt gleichmäßig durch das Faserbündel 6, vorausgesetzt, daß dieses nicht allzu dick ist, verglichen mit der Dicke des homogenen Körpers 65. Der Körper 65 oder der Teil der Trageinrichtung, der das Faserbündel 6 aufnimmt, muß also einen konstanten Durchdringungswiderstand aufweisen, der größer ist als der des zu imprägnierenden Faserbündels. Dadurch wird das Faserbündel 6 in radialer Richtung mit einer kontinuierlichen, von der Filamentverteilung des Faserbündels unabhängigen gleichmäßigen Matrixwerkstofffließfront durchströmt. Realisiert wird dies, indem der Körper 6 als ein Zylinderabschnitt mit hohem Durchdringungswiderstand ausgebildet wird.

In Fig. 8 ist die in Fig. 6 und 7 beschriebene Durchströmung des Faserbündels auf ein in der Fig. 2 beschriebenes Imprägnierrad dargestellt. Dabei besteht die Lauffläche 35 des Imprägnierrades aus einer homogenen Schicht eines Materials mit einem hohen Durchdringungswiderstand. Die Lauffläche 35 wird von innen durch den flüssigen Matrixwerkstoff durchsetzt, der in der Ausschnittsvergrößerung mit dem Bezugszeichen 68 gekennzeichnet ist. Durch die Ausbildung der Lauffläche 35 entsteht eine gleichmäßige Fließfront, so daß das außenliegende Faserbündel 6 gleichmäßig durchströmt wird. Dies geschieht unabhängig davon, ob das Faserbündel 6 eine gleichmäßige oder ungleichmäßige Dickenverteilung aufweist.

## Patentansprüche

1. Verfahren zur Faserbündelimprägnierung, bei dem das Faserbündel von einem Matrixwerkstoff durchtränkt wird,
dadurch **gekennzeichnet,**
daß das Faserbündel auf eine Trageinrichtung aufgelegt wird und
daß die Trageinrichtung zusammen mit dem aufliegenden Faserbündel an einer Imprägniereinrichtung vorbeigeführt wird.

2. Verfahren zur Faserbündelimprägnierung nach Anspruch 1,
dadurch **gekennzeichnet,**
daß zum Fixieren des Faserbündels eine Zugspannung auf das Faserbündel ausgeübt wird.

3. Verfahren zur Faserbündelimprägnierung nach einem der Ansprüche 1 bis 2,
dadurch **gekennzeichnet,**
daß das Faserbündel vor dem Imprägniervorgang erwärmt wird.

4. Verfahren zur Faserbündelimprägnierung nach einem der Ansprüche 1 bis 3,
dadurch **gekennzeichnet,**
daß der Matrixwerkstoff durch die Trageinrichtung zu dem Faserbündel geführt wird.

5. Vorrichtung zur Faserbündelimprägnierung mit einer Imprägniereinrichtung zur Durchtränkung des Faserbündels mit einem Matrixwerkstoff,
dadurch **gekennzeichnet,**
daß eine Trageinrichtung zur Aufnahme des Faserbündels (6) vorgesehen ist,
daß die Trageinrichtung beweglich ist und daß die Trageinrichtung im Bereich der Imprägniereinrichtung angeordnet ist.

6. Vorrichtung zur Faserbündelimprägnierung nach Anspruch 5,
dadurch **gekennzeichnet,**
daß die Trageinrichtung ein Rad (3) ist, welches einen feststehenden Nabenbereich (31,32,33,34) und eine drehbare Lauffläche (35) aufweist.

7. Vorrichtung zur Faserbündelimprägnierung nach einem der Ansprüche 5 oder 6,
dadurch **gekennzeichnet,**
daß die Trageinrichtung zur Aufnahme und Imprägnierung mehrerer parallel geführter Faserbündel ausgebildet ist.

8. Vorrichtung zur Faserbündelimprägnierung nach einem der Ansprüche 5 bis 7,
dadurch **gekennzeichnet,**
daß mehrere Trageinrichtungen hintereinandergeschaltet sind, und
daß sich die Trageinrichtungen gegensinnig zueinander bewegen, um eine Imprägnierung von beiden Seiten des Faserbündels zu ermöglichen.

9. Vorrichtung zur Faserbündelimprägnierung, bei welcher das Faserbündel von einem Matrixwerkstoff durchtränkt wird,
dadurch **gekennzeichnet,**
daß eine Trageinrichtung zur Aufnahme des Faserbündels (6) vorgesehen ist,
daß der zur Aufnahme des Faserbündels (6) ausgebildete Bereich (35, 45, 55, 65) der Trageinrichtung für den Matrixwerkstoff durchlässig ist,
daß dieser Bereich (35, 45, 55, 65) homogen ausgebildet ist, so daß der Durchdringungswiderstand für den Matrixwerkstoff konstant ist, und
daß dieser Bereich (35, 45, 55, 65) einen für den Matrixwerkstoff hohen Durchdringungswiderstand aufweist, der insbesondere höher ist als der des aufgelegten Faserbündels (6).

10. Vorrichtung zur Faserbündelimprägnierung nach Anspruch 9,
dadurch **gekennzeichnet**,
daß der zur Aufnahme des Faserbündels, ausgebildete, für den Matrixwerkstoff durchlässige Bereich der Trageinrichtung als ein Zylinderabschnitt mit hohem Durchdringungswiderstand ausgebildet ist.

## Claims

1. Process for fibre bundle impregnation, in which the fibre bundle is impregnated by a matrix material,
**characterized** in
that the fibre bundle is placed on a support means and that the support means, together with the fibre bundle resting thereon, is led past an impregnating device.

2. Process for fibre bundle impregnation according to claim 1,
**characterized** in
that a tensile stress is exerted on the fibre bundle for fixing the same.

3. Process for fibre bundle impregnation according to one of the claims 1 to 2,
**characterized** in
that the fibre bundle is heated prior to the impregnation process.

4. Process for fibre bundle impregnation according to one of the claims 1 to 3,
**characterized** in
that the matrix material is led through the support means to the fibre bundle.

5. Apparatus for fibre bundle impregnation having an impregnating device for impregnating the fibre bundle with a matrix material,
**characterized** in
that a support means is provided for receiving the fibre bundle (6), and
that said support means is movable and that the support means is located in the vicinity of the impregnating device.

6. Apparatus for fibre bundle impregnation according to claim 5,
**characterized** in
that the support means is a wheel (3), which has a fixed hub region (31, 32, 33, 43) and a rotary contact surface (35).

7. Apparatus for fibre bundle impregnation according to one of the claims 5 or 6,
**characterized** in
that the support means is constructed for receiving and impregnating several parallel guided fibre bundles.

8. Apparatus for fibre bundle impregnation according to one of the claims 5 to 7,
**characterized** in
that several support means are arranged in succession, and
that the support means move in opposition to one another, so as to permit an impregnation from both sides of the fibre bundle.

9. Apparatus for fibre bundle impregnation, in which the fibre bundle is impregnated by a matrix material,
**characterized** in
that a support means is provided for receiving the fibre bundle (6),
that the area (35, 45, 55, 65) of the support means for receiving the fibre bundle (6) is permeable for the matrix material,
that said area (35, 45, 55, 65) is homogeneously constructed, so that there is a constant penetration resistance for the matrix material, and
that this area (35, 45, 55, 65) has a high penetration resistance for the matrix material and which is in particular higher than that of the resting fibre bundle (6).

10. Apparatus for fibre bundle impregnation according to claim 9,
**characterized** in
that the area of the support means constructed for receiving the fibre bundle and which is permeable for the matrix material is constructed as a cylinder portion with a high penetration resistance.

## Revendications

1. Procédé d'imprégnation de faisceaux de fibres, dans lequel le faisceau de fibres est imbibé d'un matériau de matrice, ***caractérisé en ce que*** le faisceau de fibres est déposé sur un dispositif porteur et ***en ce que*** le dispositif porteur avec le faisceau de fibres posé dessus est passé devant un dispositif d'imprégnation.

2. Procédé d'imprégnation de faisceaux de fibres selon la Revendication 1, ***caractérisé en ce que***, pour fixer le faisceau de fibres, une contrainte de traction est exercée sur le faisceau de fibres.

3. Procédé d'imprégnation de faisceaux de fibres selon l'une quelconque des Revendications 1 à 2, ***caractérisé en ce que*** le faisceau de fibres est chauffé avant l'opération d'imprégnation.

4. Procédé d'imprégnation de faisceaux de fibres selon l'une quelconque des Revendications 1 à 3, ***caractérisé en ce que*** le matériau de matrice est amené au faisceau de fibres par le dispositif porteur.

5. Dispositif d'imprégnation de faisceaux de fibres avec un dispositif d'imprégnation pour imbiber le faisceau de fibres avec un matériau de matrice, ***caractérisé en ce qu***'un dispositif porteur destiné à recevoir le faisceau de fibres (6) est prévu, ***en ce que*** le dispositif porteur est mobile et ***en ce que*** le dispositif porteur est placé au niveau du dispositif d'imprégnation.

6. Dispositif d'imprégnation de faisceaux de fibres selon la Revendication 5, ***caractérisé en ce que*** le dispositif porteur est une roue (3), qui présente une zone de moyeu (31, 32, 33, 34) immobile et une surface de roulement (35) rotative.

7. Dispositif d'imprégnation de faisceaux de fibres selon l'une quelconque des Revendications 5 ou 6, ***caractérisé en ce que*** le dispositif porteur est conformé pour recevoir et imprégner plusieurs faisceaux de fibres guidés de manière parallèle.

8. Dispositif d'imprégnation de faisceaux de fibres selon l'une quelconque des Revendications 5 à 7, ***caractérisé en ce que*** plusieurs dispositifs porteurs sont placés les uns derrière les autres, et ***en ce que*** les dispositifs porteurs se déplacent en sens inverse les uns des autres, afin de permettre une imprégnation des deux côtés du faisceau de fibres.

9. Dispositif d'imprégnation de faisceaux de fibres dans lequel le faisceau de fibres est imbibé par un matériau de matrice, ***caractérisé en ce qu***'un dispositif porteur destiné à recevoir le faisceau de fibres (6) est prévu, ***en ce que*** la zone (35, 45, 55, 65) du dispositif porteur conformée pour recevoir le faisceau de fibres (6) est perméable au matériau de matrice, ***en ce que*** cette zone (35, 45, 55, 65) est d'une conformation homogène, de sorte que la résistance à la pénétration du matériau de matrice est constante, et ***en ce que*** cette zone (35, 45, 55, 65) présente une haute résistance à la pénétration du matériau de matrice, qui est en particulier supérieure à celle du faisceau de fibres (6) déposé.

10. Dispositif d'imprégnation de faisceaux de fibres selon la Revendication 9, ***caractérisé en ce que*** la partie du dispositif porteur perméable au matériau de matrice et conformée pour recevoir le faisceau de fibres est conformée en section de cylindre à haute résistance à la pénétration.
